# EUROPÄISCHE PATENTANMELDUNG

(11) **EP 4 360 950 A1**
(43) Veröffentlichungstag der Anmeldung: **01.05.2024**
(21) Anmeldenummer: 23193274.0
(22) Anmeldetag: 24.08.2023
(51) Int. Cl.: B60N 3/00, B60N 3/10, B64D 11/06

(54) **TISCHEINRICHTUNG**

(30) Priorität: 26.10.2022 DE 102022128321
(71) Anmelder: GRAMMER AG, 92289 Ursensollen (DE)
(72) Erfinder: Hägler, Thomas, 92533 Wernberg-Köblitz (DE); Neidl, Christopher, 92546 Schmidgaden (DE)
(74) Vertreter: Hannke Bittner & Partner mbB Regensburg

(57) **Zusammenfassung**

Die Erfindung betrifft eine Tischeinrichtung insbesondere für eine Sitzanordnung in einem Personentransportmittel umfassend ein erstes Tischelement, wobei das erste Tischelement ein zweites Tischelement zumindest teilweise umschließt, wobei das zweite Tischelement sowohl zusammen mit dem ersten Tischelement als auch unabhängig von dem ersten Tischelement zwischen einer ersten Position und einer zweiten Position verlagerbar ist.

## Beschreibung

Die Erfindung betrifft eine Tischeinrichtung insbesondere für eine Sitzanordnung in einem Personentransportmittel umfassend ein erstes Tischelement.

Derartige Personentransportmittel sind beispielsweise Schienenfahrzeuge, Busse oder aber auch Flugzeuge. Die Sitzanordnungen sind üblicherweise in Reihen in dem Personentransportmittel angeordnet. Weiterhin umfassen die Sitzanordnungen zumeist eine Tischeinrichtung mit einem Tischelement, welches zwischen einer ersten Position und einer zweiten Position verlagerbar, beziehungsweise klappbar, ist. Die Tischeinrichtungen sind oftmals vor oder seitlich der jeweiligen Sitzanordnung und dienen zur Ablage von Gegenständen, Getränken oder Speisen. Dabei kann eine solche Tischeinrichtung an der Rückseite einer vorderen Sitzanordnung oder an einem Abschnitt des Personentransportmittels angeordnet sein. Letzteres ist bei Sitzanordnungen in der ersten Reihe die Regel.

Der Zwischenraum zwischen zwei Sitzanordnungen ist jedoch oftmals begrenzt, so dass ein ausgeklapptes Tischelement oftmals als störend empfunden wird. Ferner fehlt es in der Regel an einer alternativen Ablagemöglichkeit für kleinere Gegenstände, beispielsweise das Smartphone oder ein Getränk.

Aufgabe der Erfindung ist es eine Tischeinrichtung bereitzustellen, bei welcher die genannten Nachteile überwunden oder zumindest reduziert sind.

Die Aufgabe wird durch den Gegenstand der unabhängigen Ansprüche 1 und 10 gelöst. Vorteilhafte Ausgestaltungen sind den Unteransprüchen zu entnehmen.

Kerngedanke der Erfindung ist eine Tischeinrichtung insbesondere für eine Sitzanordnung in einem Personentransportmittel umfassend ein erstes Tischelement, wobei das erste Tischelement ein zweites Tischelement zumindest teilweise umschließt, wobei das zweite Tischelement sowohl zusammen mit dem ersten Tischelement als auch unabhängig von dem ersten Tischelement zwischen einer ersten Position und einer zweiten Position verlagerbar ist.

Das zweite Tischelement ist demnach kleiner als das erste Tischelement und kann für kleinere Gegenstände beispielsweise ein Smartphone, Schlüssel etc. oder ein Getränk genutzt werden. Es wird somit eine Ablage bereitgestellt, welche den Zwischenraum zwischen zwei Sitzanordnungen wesentlich geringer einschränkt. Bei Bedarf kann jedoch eine größere Auflagefläche in Form des ersten Tischelements genutzt werden.

Die Tischeinrichtung erstreckt sich entlang einer Längsachse (X), einer Breitenachse (Y) und entlang einer Höhenachse (Z).

Nach einer besonders bevorzugten Ausführungsform sind das erste Tischelement und das zweite Tischelement um eine Schwenkachse verschwenkbar. Vorzugsweise verläuft die Schwenkachse in einem entlang der Längsachse (X) unteren Bereich des ersten Tischelements und einem entlang der Längsachse (X) unteren Bereich des zweiten Tischelements. Vorteilhafterweise ist das zweite Tischelement sowohl gemeinsam mit dem ersten Tischelement als auch unabhängig von dem ersten Tischelement um die Schwenkachse verschwenkbar.

Nach einer weiteren bevorzugten Ausführungsform umfasst die Tischeinrichtung zumindest zwei Befestigungselemente, mittels welchen die Tischeinrichtung an der Sitzanordnung und/oder an dem Personentransportmittel anordenbar ist. Vorzugsweise ist das erste Tischelement verschwenkbar an den zumindest zwei Befestigungselementen angeordnet. Vorteilhafterweise erstreckt sich die Schwenkachse durch die zumindest zwei Befestigungselemente.

Vorteilhafterweise ist zwischen der ersten Position und der zweiten Position ein Winkel β aufgespannt. Der Winkel β liegt bevorzugt in einem Bereich zwischen 80°und 95°, weiter bevorzugt zwischen 85° und 90° weiter bevorzugt bei ca. 90°. Weiterhin ist es von Vorteil, dass zwischen dem ersten Tischelement und dem zweiten Tischelement ein Winkel α aufgespannt ist. Vorzugsweise liegt der Winkel α in einem Bereich zwischen 0° und 95°. Befinden sich somit sowohl das erste Tischelement als auch das zweite Tischelement gemeinsam in der ersten Position oder gemeinsam in der zweiten Position so ist der Winkel α ca. 0°. Befindet sich das erste Tischelement in der ersten Position und das das zweite Tischelement in der zweiten Position so ist der Winkel α in einem Bereich zwischen 85°und 95° bevorzugt ca. 90°.

Nach einer weiteren vorteilhaften Ausführungsform weist das erste Tischelement eine Ausnehmung auf, in welcher das zweite Tischelement anordenbar ist. Vorzugsweise ist das erste Tischelement U-artig ausgestaltet. Dabei ist es von Vorteil, dass das erste Tischelement und/oder das zweite Tischelement in der zweiten Position eine Auflagefläche beziehungsweise eine Ablagefläche bereitstellen. Vorteilhafterweise ist das erste Tischelement plattenartig ausgebildet. Bevorzugt weist das erste Tischelement eine erste Oberfläche auf, welche in der zweiten Position die Auflagefläche zumindest teilweise ausbildet. Das zweite Tischelement ist vorzugsweise ebenso plattenartig ausgebildet. Auch das zweite Tischelement weist bevorzugt eine zweite Oberfläche auf, welche in der zweiten Position die Auflagefläche zumindest teilweise ausbildet. Befinden sich sowohl das erste Tischelement als auch das zweite Tischelement in der zweiten Position so bilden vorteilhafterweise die erste Oberfläche des ersten Tischelements und die zweite Oberfläche des zweiten Tischelements gemeinsam die Auflagefläche aus.

Die erste Position ist demnach vorteilhafterweise eine "eingeklappte" Position, in welcher sich die Tischelemente im Wesentlichen parallel zu einer Rückseite der vorderen Sitzanordnung oder einem Abschnitt, beispielsweise ein Wandelement, des Personentransportmittels erstrecken. In der ersten Position beschränken somit die Tischelemente den Zwischenraum nicht nennenswerter Weise. In der zweiten Position, der "ausgeklappten Position" ist entweder lediglich das zweite Tischelement oder das zweite Tischelement gemeinsam mit dem ersten Tischelement um den Winkel β verschwenkt.

Dabei kann das zweite Tischelement von der ersten Position in die zweite Position und auch wieder von der zweiten Position zurück zu der ersten Position verschwenkt werden. Dabei bleibt das erste Tischelement unverändert in der ersten Position. Durch eine solche Ausgestaltung kann lediglich eine vergleichsweise kleine Ablagefläche bereitgestellt werden ohne, dass der Zwischenraum zwischen den Sitzanordnungen übermäßig eingeschränkt wird. Wird eine größere Ablagefläche benötigt kann das erste Tischelement gemeinsam mit dem zweiten Tischelement von der ersten Position in die zweite Position und auch wieder von der zweiten Position zurück zu der ersten Position verschwenkt werden.

Nach einer weiteren vorteilhaften Ausführungsform ist ein Halte- und Verstellmechanismus vorgesehen, der zumindest eine erste Widerstandskraft bereitstellt. Vorzugsweise wirkt zumindest eine erste Widerstandskraft zwischen dem ersten Tischelement und dem zweiten Tischelement, so dass eine gemeinsame Bewegung von der ersten Position zu der zweiten Position als auch von der zweiten Position zu der ersten Position ermöglicht ist. Bei der gemeinsamen Bewegung der Tischelemente von der ersten Position zu der zweiten Position oder von der zweiten Position zu der ersten Position muss demnach vorteilhafterweise lediglich eine Kraftwirkung, beispielsweise an dem ersten Tischelement aufgebracht werden. Durch die zumindest eine erste Widerstandskraft wird das weitere Tischelemente, beispielsweise das zweite Tischelement mitgenommen. Wird zunächst das zweite Tischelement von der ersten in die zweite Position verschwenkt und dann anschließend das erste Tischelement ebenso in die zweite Position verschwenkt, so wirkt dann in der zweiten Position wieder zumindest eine erste Widerstandskraft zwischen den beiden Tischelementen. Bei einer Verschwenkung des ersten Tischelements zurück in die erste Position wird somit auch das zweite Tischelement in die erste Position mitgenommen. Es ist somit nicht notwendig beide Tischelemente separat zurück zu verschwenken.

Vorteilhafterweise ist durch die zumindest eine erste Widerstandskraft eine gebremste Bewegung des zweiten Tischelements von der ersten Position zu der zweiten Position ermöglicht. Durch eine solche gebremste Bewegung wird ein schnelles unkontrolliertes Herunterklappen des Tischelements vermieden.

Nach einer weiteren bevorzugten Ausführungsform stellt der Halte- und Verstellmechanismus zumindest eine zweite Widerstandskraft bereit. Vorzugsweise wirkt die zumindest eine zweite Widerstandskraft zwischen dem ersten Tischelement und zumindest einem der zumindest zwei Befestigungselemente. Bevorzugt ist mittels der zumindest einen zweiten Widerstandskraft das erste Tischelement in der ersten Position gehalten. Durch die Wirkung der zumindest einen ersten Widerstandskraft zwischen den beiden Tischelementen wird somit auch das zweite Tischelement in der ersten Position gehalten. Für eine Verlagerung beziehungsweise Verschwenkung des ersten Tischelements und/oder des zweiten Tischelements muss demnach eine Kraft aufgewendet werden, welche die zumindest eine zweite Widerstandskraft überwindet. Durch die zumindest eine zweite Widerstandskraft wird eine gebremste Bewegung des ersten Tischelements von der ersten Position zu der zweiten Position ermöglicht. Durch die Wirkung der zumindest einen ersten Widerstandskraft zwischen den beiden Tischelementen wird somit, bei einer gemeinsamen Verschwenkung der Tischelemente, auch für das zweite Tischelement eine gebremste Bewegung von der ersten Position zu der zweiten Position ermöglicht. Durch eine solche gebremste Bewegung wird ein schnelles unkontrolliertes herunterklappen der Tischelemente vermieden.

Nach einer weiteren vorteilhaften Ausführungsform umfasst der Halte- und Verstellmechanismus zwei dornartige Elemente. Die dornartigen Elemente sind jeweils an einem Lagerungsabschnitt des ersten Tischelements angeordnet. Vorzugsweise sind die dornartigen Elemente als integral Lagerungsabschnitte ausgebildet. Die dornartigen Elemente können einstückig oder einteilig mit dem Lagerungsabschnitt ausgebildet sein. Unter einer einteiligen Ausgestaltung ist hierbei zu verstehen, dass sämtliche Abschnitte aus einem einzigen und einheitlichen Teil gefertigt werden. Unter einer einstückigen Ausgestaltung ist hierbei zu verstehen, dass sämtliche Abschnitte zwar nicht aus einem einzigen und einheitlichen Teil gefertigt werden, jedoch nicht nur fest, sondern so innig miteinander verbunden sind, dass sie nicht als mehrere aneinander gefügte Bauteile erscheinen und jedenfalls nicht mehr voneinander gelöst werden können, ohne dass dabei diese dabei zerstört werden. Die Lagerungsabschnitte sind weiterhin vorteilhafterweise auf einer Rückseite ersten Tischelements vorgesehen. Die Rückseite des ersten Tischelements ist der ersten Oberfläche entlang der Höhenachse (Z) gegenüberliegend. Bevorzugt sind die zwei dornartigen Elemente entlang einer Bereitachse (Y) gegenüberliegend angeordnet.

Dabei ist es von Vorteil, dass je ein dornartiges Element durch einen Durchgangskanal eines entsprechenden Befestigungselements hindurchragt. Vorteilhafterweise erstreckt sich die Schwenkasche mittig durch die dornartigen Elemente. Der Durchgangskanal umfasst einen hohlzylindrischen Aufnahmebereich, in welchen ein kreisförmiger Führungsbereich des jeweiligen dornartigen Elements aufsitzt beziehungsweise geführt wird.

Nach einer weiteren vorteilhaften Ausführungsform ist zwischen einem dornartigen Element und dem jeweiligen Befestigungselement ein erstes Reibelement angeordnet. Bevorzugt sind zwei erste Reibelemente vorgesehen, wobei jeweils ein erstes Reibelement zwischen einem dornartigen Element und dem jeweiligen Befestigungselement angeordnet ist. Vorteilhafterweise ist das erste Reibelement an oder in dem Befestigungselement befestigt. Eine solche Befestigung kann beispielsweise durch eine formschlüssige und/oder eine stoffschlüssige Verbindung erfolgen. Vorteilhafterweise ist das erste Reibelement derart an oder in dem Befestigungselement befestigt, dass keine Bewegung des ersten Reibelements relativ zu dem Befestigungselement ermöglicht ist. Vorzugsweise liegt eine Überpressung des ersten Reibelements zu dem dornartigen Element vor. Bevorzugt ist die zweite Widerstandskraft durch die Reibung zwischen dem dornartigen Element und dem ersten Reibelement verursacht. Somit wird durch die Reibung zwischen dem ersten Reibelement und dem dornartigen Element das erste Tischelement zumindest in der ersten Position gehalten und auch eine gebremste Bewegung des ersten Tischelements zwischen der ersten Position und der zweiten Position ermöglicht.

Nach einer weiteren besonders bevorzugten Ausführungsform ist das zweite Tischelement an dem ersten Tischelement und den Befestigungselementen verschwenkbar angeordnet. Vorzugsweise ragen die beiden dornartigen Elemente in ein Aufnahmeelement des zweiten Tischelements abschnittsweise hinein. Vorzugsweise umfasst jeweils ein Befestigungselement einen ringartigen Führungsvorsprung an welchen das Aufnahmeelement anliegt.

Nach einer weiteren besonders bevorzugten Ausführungsform ist an zumindest einem dornartigen Element ein Aufsatzbauteil befestigt. Dabei ist vorteilhafterweise zwischen dem Aufsatzbauteil und einem Aufnahmeelement des zweiten Tischelements ein zweites Reibelement angeordnet. Vorzugsweise ist das zweite Reibelement an oder in dem Aufnahmeelement des zweiten Tischelements befestigt. Dabei ist es von Vorteil, dass eine Überpressung des zweiten Reibelements zu dem Aufsatzbauteil vorliegt. Vorzugsweise ist die erste Widerstandskraft durch die Reibung zwischen dem Aufsatzbauteil und dem zweiten Reibelement verursacht. Dabei ist es von Vorteil, dass das Aufnahmeelement durch zwei schalenartige Elemente gebildet wird, welche durch eine form- und/oder kraftschlüssige Verbindung miteinander verbunden sind.

Vorzugsweise umfasst das Aufsatzbauteil eine Mehrzahl von Reibflächen. Dabei besteht in Abhängigkeit von dem Winkel α eine Reibverbindung zwischen dem Reibelement und zumindest einer Reibfläche. In einem Zustand, in welchem sich das erste Tischelement und das zweite Tischelement in der zweiten Position befinden ist somit vorteilhafterweise die Reibung zwischen dem Aufsatzbauteil und dem zweiten Reibelement ausreichend groß, um eine gemeinsame Verlagerung des ersten Tischelements und des zweiten Tischelements von der zweiten Position zu der ersten Position zu ermöglichen.

Nach einer weiteren Ausführungsform ist in der zweiten Oberfläche des zweiten Tischelements zumindest eine Einbuchtung und/oder Aufnahme vorgesehen. Die Aufnahme kann als eine Aufnahme für ein Getränk ausgestaltet sein. Denkbar wäre es auch die Aufnahme für ein Smartphone oder für anderweitige kleine Gegenstände auszugestalten. Kumulativ oder alternativ kann eine solche zumindest eine Einbuchtung und/oder Aufnahme bei dem erste Tischelement vorgesehen sein.
Die vorliegende Aufgabe wird weiterhin von einer Sitzanordnung in einem Personentransportmittel umfassend einer Tischeinrichtung nach einer der zuvor genannten Ausführungsformen gelöst. Die Sitzanordnung kann dabei mit allen bereits obig im Rahmen der Tischeinrichtung beschriebenen Merkmalen einzeln oder in Kombination miteinander ausgestattet sein und umgekehrt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine Explosionsdarstellung einer Tischeinrichtung;
- Fig. 2a bis 2c: Ansichten einer Tischeinrichtung nach verschiedenen Ausführungsformen;
- Fig. 3a bis 3c: Ansichten einer Tischeinrichtung in verschiedenen Zuständen;
- Fig. 4: Ausschnitt einer Explosionsdarstellung einer Tischeinrichtung;
- Fig. 5: Schnittansicht einer Tischeinrichtung;
- Fig. 6: Draufsicht einer Tischeinrichtung von hinten;
- Fig. 7: Seitenansicht einer Tischeinrichtung;
- Fig. 8a bis 8d: Schnittansicht (Schnitt (A-A) einer Tischeinrichtung in verschiedenen Zuständen;
- Fig. 9a bis 9d: Schnittansicht (Schnitt (E-E) einer Tischeinrichtung in verschiedenen Zuständen;
- Fig. 10a bis 10d: verschiedene Ansichten eines Reibelements;
- Fig. 11a bis 11d: verschiedene Ansichten eines Aufsatzbauteil;
- Fig. 12a bis 12b: verschiedene Schnittansichten des Aufsatzbauteils;
- Fig. 13, 13a bis 13f: verschiedene Ansichten des Befestigungselements;
- Fig. 14: eine Sitzanordnung mit einer Tischeinrichtung.

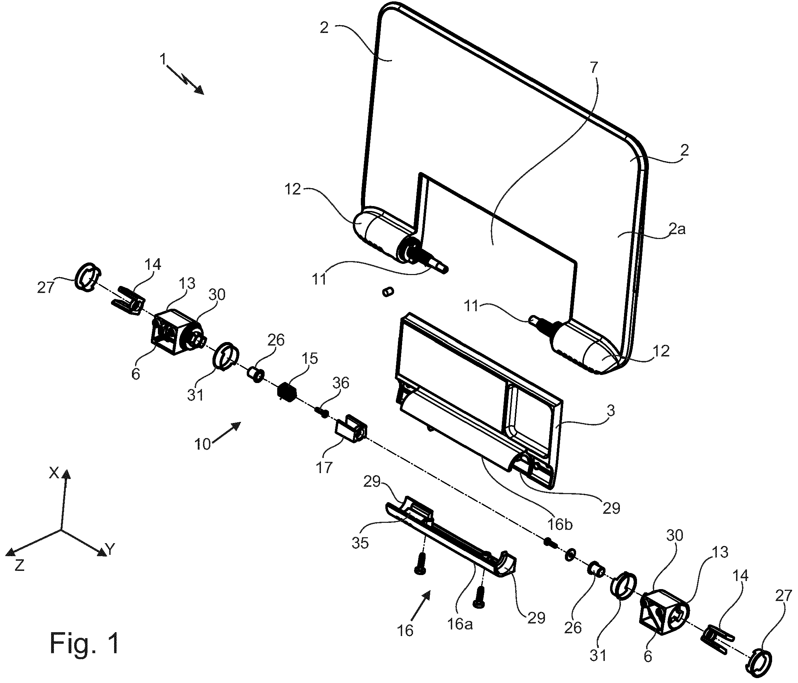

In den Figuren 1 bis 8 ist eine Tischeinrichtung 1 dargestellt insbesondere für eine Sitzanordnung 100 in einem Personentransportmittel umfassend ein erstes Tischelement 2, wobei das erste Tischelement 2 ein zweites Tischelement 3 zumindest teilweise umschließt, wobei das zweite Tischelement 3 sowohl zusammen mit dem ersten Tischelement 2 als auch unabhängig von dem ersten Tischelement 2 zwischen einer ersten Position und einer zweiten Position verlagerbar ist.

Die Tischeinrichtung 1 erstreckt sich entlang einer Längsachse X, einer Breitenachse Y und entlang einer Höhenachse Z.

Es ist eine Schwenkachse S vorgesehen, um welche das erste Tischelement 2 und das zweite Tischelement 3 verschwenkbar sind. Die Schwenkachse S erstreckt sich entlang der Breitenachse Y und verläuft in einem entlang der Längsachse X gesehenen unteren Bereich 4 des ersten Tischelements 2. Ebenso verläuft die Schwenkachse S in einem entlang der Längsachse X gesehenen unteren Bereich 5 des zweiten Tischelements 3. Somit sind das erste Tischelement 2 und das zweite Tischelement 3 um die Schwenkachse S verschwenkbar. Bei einer Verschwenkung des ersten Tischelements 2 und/oder des zweiten Tischelements 3 aus der ersten Position in die zweite Position und umgekehrt erfolgt die Verschwenkung um einen Winkel β. Der Winkel β ist somit zwischen der ersten Position und der zweiten Position angeordnet. Der Winkel β liegt in einem Bereich zwischen 80°und 95° bevorzugt zwischen 85° und 90° weiter bevorzugt bei ca. 90°.Bei einer Verschwenkung der Tischelemente 2,3 relativ zueinander ist zwischen den beiden Tischelementen 2,3 ein Winkel α vorhanden. Der Winkel α liegt in einem Bereich zwischen 0° und 95° bevorzugt bei ca. 90°.

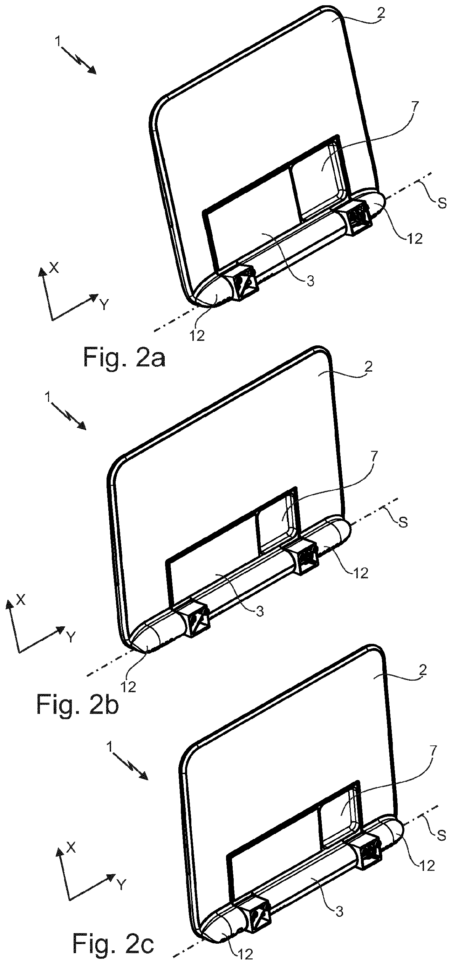

Weiterhin weist das erste Tischelement 2 eine Ausnehmung 7 auf, in welcher das zweite Tischelement 3 anordenbar ist. Das zweite Tischelement 3 ist somit in der Ausnehmung 7 angeordnet, wenn sich beide Tischelemente 2,3 in derselben Position, also der ersten oder der zweiten Position befinden. Das erste Tischelement 2 ist im Übrigen plattenartig ausgebildet. Das erste Tischelement 2 und das zweite Tischelement 3 können eine beliebige polygonförmige Grundfläche aufweisen. Die entsprechende Form und auch die entsprechende Größe der beiden Tischelemente 2,3 kann den Anforderungen angepasst werden. In den Figuren 2a-2c sind einige unterschiedliche Ausgestaltungen dargestellt. In Figur 2a ist das erste Tischelement 2 annähernd quadratisch und das zweite Tischelement 3 im Wesentlichen rechteckförmig ausgebildet.

In den Figuren 2b und 2c ist das erste Tischelement 2 im Wesentlichen rechteckförmig ausgebildet. Ebenso ist das zweite Tischelement 3 im Wesentlichen rechteckförmig ausgebildet. Diese Ausgestaltungen sollen jedoch keine Beschränkung der Allgemeinheit darstellen.

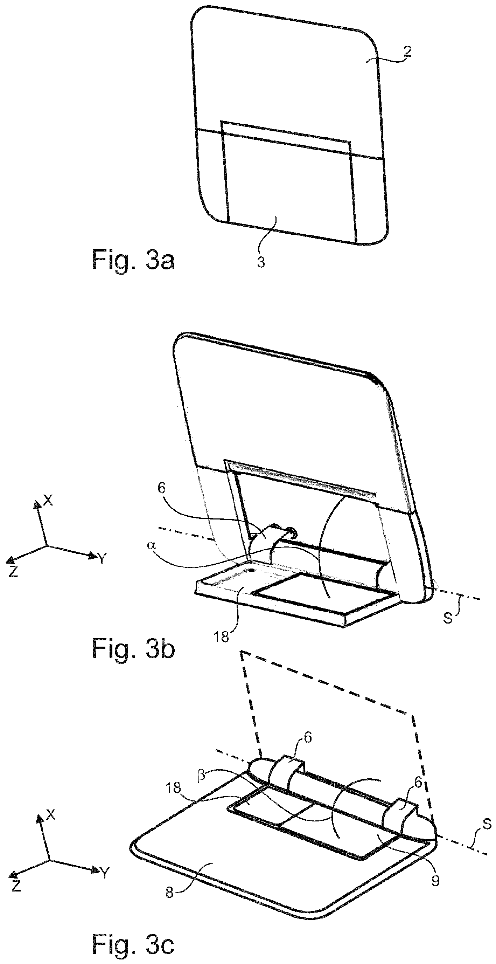

Das erste Tischelement 2 weist weiterhin eine erste Oberfläche 8 auf, welche zumindest teilweise eine Auflagefläche ausbildet, wenn sich das erste Tischelement 2 in der zweiten Position befindet. Auch das zweite Tischelement 3 ist plattenartig ausgebildet und weist weiterhin eine zweite Oberfläche 9 auf. Befinden sich beide Tischelemente 2, 3 in der zweiten Position bilden die erste 8 und die zweite Oberfläche 9 gemeinsam die Auflagefläche beziehungsweise Ablagefläche aus. Dies ist in Figur 3c gut ersichtlich.

In Figur 3b ist ein Zustand dargestellt, in welchem lediglich das zweite Tischelement 3 sich in der zweiten Position befindet. Das erste Tischelement 2 befindet sich in der ersten Position. Hier stellt lediglich die zweite Oberfläche 9 die Auflagefläche dar.

Die zweite Oberfläche 9 weist weiterhin eine Einbuchtung 18 auf. Diese kann quadratisch rechteckförmig kreisförmig oder anderweit polygonförmig ausgestaltet sein. Diese Einbuchtung 18 kann zur Aufnahme kleiner Gegenstände, beispielsweise Schlüssel oder zur Aufnahme eines Getränkebehälters dienen. Ferner ist es denkbar, dass mehrere Einbuchtungen 18 und/oder Aufnahmen in der zweiten Oberfläche 9 vorgesehen sind. Denkbar wäre auch, dass in der zweiten Oberfläche 9 zumindest ein separates Aufnahmeelement 16 eingefügt ist. Alternativ oder kumulativ können die genannten Aufnahmen oder Einbuchtungen 18 auch in der ersten Oberfläche 8 vorgesehen sein.

Es ist ein Halte- und Verstellmechanismus 10 vorgesehen, der zumindest eine erste Widerstandskraft bereitstellt. Diese zumindest eine erste Widerstandskraft wirkt, zwischen dem ersten Tischelement 2 und dem zweiten Tischelement 3, so dass eine gemeinsame Bewegung von der ersten Position zu der zweiten Position als auch von der zweiten Position zu der ersten Position ermöglicht ist. Durch die zumindest eine erste Widerstandskraft ist eine gebremste Bewegung des zweiten Tischelements 3 von der ersten Position zu der zweiten Position ermöglicht.

Weiterhin stellt der Halte- und Verstellmechanismus 10 zumindest eine zweite Widerstandskraft bereit. Die zumindest eine zweite Widerstandskraft wirkt zwischen dem ersten Tischelement 2 und zumindest einem der zumindest zwei Befestigungselemente 6. Dabei wird mittels der zumindest einen zweiten Widerstandskraft das erste Tischelement 2 in der ersten Position gehalten. Durch die zumindest eine zweite Widerstandskraft ist weiterhin eine gebremste Bewegung des ersten Tischelements 2 von der ersten Position zu der zweiten Position ermöglicht.

Der Halte- und Verstellmechanismus 10 umfasst zwei dornartige Elemente 11. Dies ist beispielsweise in Figur 1 gut ersichtlich. Die dornartigen Elemente 11 sind jeweils an einem Lagerungsabschnitt 12 des ersten Tischelements 2 angeordnet. Vorzugsweise sind die dornartigen Elemente 11 integral mit jeweils einem Lagerungsabschnitt 12 ausgebildet. Die Lagerungsabschnitte12 sind weiterhin auf einer Rückseite 2a ersten Tischelements 2 vorgesehen. Die Rückseite 2a des ersten Tischelements 2 ist der ersten Oberfläche 8 entlang der Höhenachse Z gegenüberliegend. Die Lagerungsabschnitte12 sind im Wesentlichen zylinderartig ausgebildet und ragen entlang der Höhenachse Z ausgehend von der Rückseite 2a des ersten Tischelements 2 weg. Der Lagerungsabschnitt ist in den Figuren 1, 2a-2c und 5-9 der gut ersichtlich. Die beiden dornartige Elemente 11 sind somit entlang der Höhenachse Z hinter der Ausnehmung 7 versetzt angeordnet. Ferner sind beiden dornartigen Elemente 11 entlang der Bereitachse Y gegenüberliegend angeordnet. Die beiden dornartigen Elemente 11 ragen somit in eine Ebene hinein, welche sich entlang der Längsachse X und entlang der Breitenachse Y parallel zu der Ausnehmung 7 erstreckt. Gegebenenfalls können die beiden dornartigen Elemente 11 auch zumindest teilweise in die Ausnehmung 7 des ersten Tischelements 2 hineinragen.

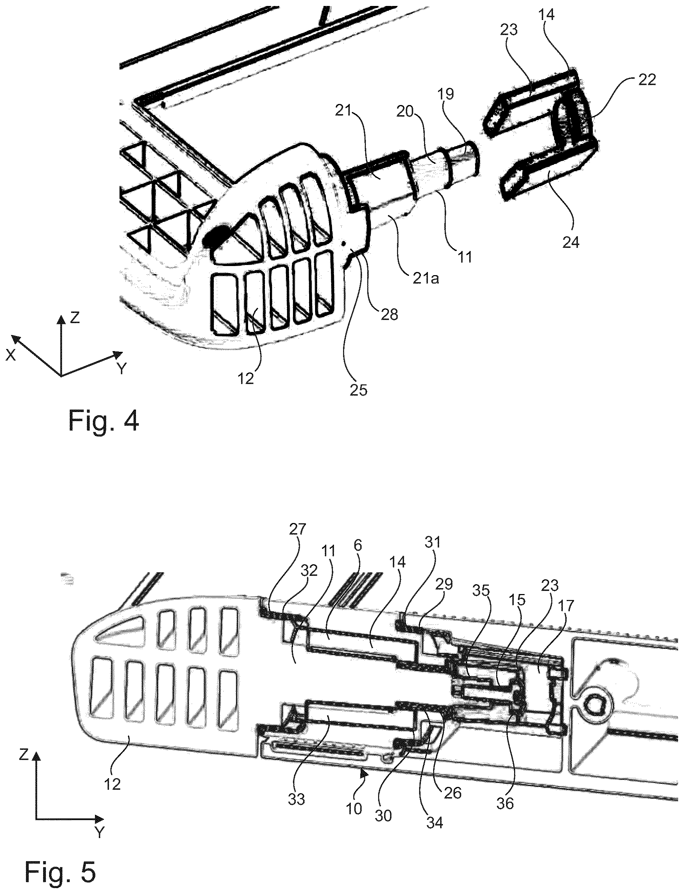

In Figur 4 ist ein dornartiges Element 11 dargestellt. Das dornartige Element 11 umfasst einen vorderen Bereich 19, einen mittleren Bereich 20 einen hinteren Bereich 21 und einen kreisförmigen Führungsbereich 25. Entlang der Breitenachse Y schleißt der vordere Bereich 19 an den mittleren Bereich 20 und dieser an den hinteren Bereich 21 an. Der hintere Bereich 21 geht schließlich in den kreisförmigen Führungsbereich 25 über. Der kreisförmige Führungsbereich 25 ist integral mit dem Lagerungsabschnitt 12 ausgebildet. Dabei ist ein Durchmesser des vorderen Bereichs 19 kleiner als ein Durchmesser des mittleren Bereichs 20. Weiterhin ist ein Durchmesser des mittleren Bereichs 20 kleiner als ein Durchmesser des hinteren Bereichs 21. Der Durchmesser des hinteren Bereichs 21 ist kleiner als der Durchmesser des kreisförmigen Führungsbereichs 25. Der hintere Bereich 21 umfasst mehrere Reibflächen 21a.

Die Befestigungselemente 6 umfassen einen Durchgangskanal 13. Dieser Durchgangskanal 13 umfasst einen hohlzylindrischen Aufnahmebereich 32, in welchem der kreisförmige Führungsbereich 25 des dornartigen Elements 11 aufgenommen ist. Der Schwenkbewegung des ersten Tischelements 2 wird somit durch die Lagerung des hohlzylindrischen Aufnahmebereichs 32 des Befestigungselements 6 an dem kreisförmigen Führungsbereich 25 des dornartigen Elements 11 geführt. Der jeweilige Durchgangskanal 13 dient somit als Lagerung des jeweiligen dornartigen Elements 11 derart, dass das erste Tischelement 2 verschwenkbar an den zumindest zwei Befestigungselementen 6 angeordnet ist. Vorteilhafterweise ist weiterhin zwischen dem kreisförmigen Führungsbereich 25 und dem hohlzylindrischen Aufnahmebereich 32 ein Lagerungsring 27 vorgesehen. Je ein dornartiges Element 11 ragt durch einen Durchgangskanal 13 eines entsprechend zugeordneten Befestigungselements 6 hindurch. Die Schwenkachse S erstreckt sich mittig durch die dornartigen Elemente 11 und durch die jeweiligen Durchgangskanäle 13.

Zwischen einem dornartigen Element 11 und dem jeweiligen Befestigungselement 6 ist ein erstes Reibelement 14 angeordnet. Das jeweilige Reibelement 14 ist an oder in dem Befestigungselement 6 befestigt. Die Anordnung des jeweiligen Reibelements 14 ist derart ausgestaltet, dass eine Überpressung des ersten Reibelements 14 zu dem jeweiligen dornartigen Element 11 vorliegt. Somit ist die zweite Widerstandskraft durch die Reibung zwischen einem dornartigen Element 11 und dem zugehörigen ersten Reibelement 14 verursacht. Demnach wird durch die Reibung beziehungsweise die Überpressung zwischen den beiden dornartigen Elementen 11 und den zugehörigen ersten Reibelementen 14 das erste Tischelement 2 in der ersten Position gehalten und weiterhin eine gebremste Bewegung des ersten Tischelements 2 von der ersten Position zu der zweiten Position ermöglicht.

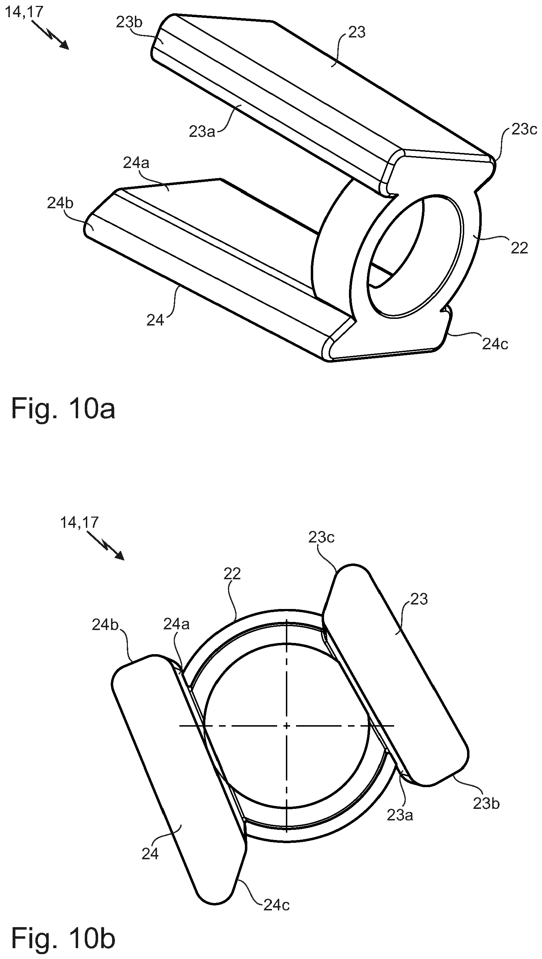

In Figur 4 ist neben dem dornartigen Element 11 auch ein entsprechendes erstes Reibelement 14 dargestellt. Das erste Reibelement 14 umfasst einen ringförmigen Zentralabschnitt 22. In Figur 5 ist ersichtlich, dass der ringförmige Zentralabschnitt 22 auf dem mittleren Bereich 20 des dornartigen Elements 11 aufsitzt. Eine detaillierte Darstellung des Reibelements 14 ist auch in den Figuren 10a bis 10d dargestellt. Das erste Reibelement 14 liegt somit entlang der Breitenachse Y näher an dem Lagerungsabschnitt 12 als der vordere Bereich 19 des dornartigen Elements 11.

Ferner umfasst das erste Reibelement 14 ein erstes Flügelelement 23 und ein zweites Flügelelement 24. Die beiden Flügelelemente 23, 24 sind integral mit dem ringförmige Zentralabschnitt 22 ausgebildet. Ferner umfassen beiden Flügelelemente 23, 24 jeweils Reibflächen 23a, 24a. Diese Reibflächen 23a, 24a sind einander gegenüberliegend und kontaktieren die Reibflächen 21a des hinteren Bereichs 21 des dornartigen Elements 11. Die beiden Flügelelemente 23, 24 sind in dem jeweiligen Befestigungselement 6 in einem zweiten Aufnahmebereich 33, befestigt, derart, dass bei einer Verschwenkung des ersten Tischelements 2 sich die beiden Flügelelemente 23, 24 nicht mitbewegen und somit stationär zu dem jeweiligen Befestigungselement 6 sind. Durch eine solche Verschwenkung drehen sich die dornartigen Elemente 11 innerhalb des Durchgangskanals 13 und die Reibflächen 21a reiben an den Reibflächen 23a, 24a beiden Flügelelemente 23, 24. Die beiden Flügelelemente 23, 24 sind vorzugsweise formschlüssig in dem zweiten Aufnahmebereich 33 des Durchganskanals 13 aufgenommen. Der zweite Aufnahmebereich 33 ist derart ausgestaltet, dass im eingebauten Zustand eine Überpressung der beiden Flügelelemente 23, 24 zu den jeweiligen Reibflächen 21a des dornartigen Elements 11 vorliegt.

Wie bereits ausgeführt umfasst der Durchgangskanal 13 des Befestigungselements 6 den hohlzylindrischen Aufnahmebereich 32, den zweite Aufnahmebereich 33 für das erste Reibelement 14 und einen Endbereich 34, welcher einen verringerten Durchmesser aufweist. Durch den Endbereich 34 ragt der mittlere Bereich 20 des dornartigen Elements 11, so dass eine weitere Lagerung der Verschwenkung des ersten Tischelements 2 relativ zu dem Befestigungselement 6 bereitgestellt wird. Vorteilhafterweise ist zwischen dem mittleren Bereich 20 des dornartigen Elements 11 und dem Endbereich 34 sowie dem mittleren Bereich 20 des dornartigen Elements 11 und dem ringförmigen Zentralabschnitt 22 des ersten Reibelements 14 eine Lagerungshülse 26 vorgesehen.

Nach einer bevorzugten Ausführungsform kann der kreisförmige Führungsbereich 25 zumindest ein Anschlagelement 28 umfassen, welches an zumindest einem korrespondierende Anschlagelement 28 in oder am Befestigungselement 6 vorzugsweise in der zweiten Position anschlägt. Denkbar wäre jedoch auch, dass keine Anschlagselemente 28 vorgesehen sind. Das erste Tischelement 2 würde dann lediglich durch die zweite Widerstandskraft beziehungsweise durch die Reibung zwischen den Reibflächen 23a, 24a und den Reibflächen 21a in der zweiten Position gehalten. Nach einer weiteren Ausgestaltung sind die Anschlagselemente 28 derart angeordnet, dass ein Anschlag sowohl in der ersten Position als auch in der zweiten Position erfolgt. Das zweite Tischelement 3 ist an dem ersten Tischelement 2 und den Befestigungselementen 6 verschwenkbar angeordnet. Das zweite Tischelement 3 umfasst ein Aufnahmeelement 16, welches vorteilhafterweise zweiteilig ausgestaltet ist. Ein erstes Teil 16a des Aufnahmeelements 16 kann mit einem zweiten Teil 16b des Aufnahmeelements 16 mittels einer Verbindung, welche beispielsweise eine form- und/oder kraftschlüssige Verbindung sein kann verbunden werden. Wie in Figur 1 ersichtlich ist vorliegend eine Verbindung mit Befestigungsmitteln in Form von Schrauben vorgesehen. In einem zusammengebauten Zustand bildet das Aufnahmeelement 16 an seinen entlang der Breitenachse Y liegenden Enden einen kreisförmig hohlzylindrischen Aufnahmebereich 29 aus.

Das Befestigungselement 6 umfasst einen ringartigen Führungsvorsprung 30, an welchen der hohlzylindrische Aufnahmebereich 29 aufsitzt und bei einer Verschwenkung geführt wird. Die Schwenkbewegung des zweiten Tischelements 3 relativ zu dem ersten Tischelement 2 wird somit durch die Lagerung des hohlzylindrischen Aufnahmebereichs 29 an dem ringartigen Führungsvorsprung 30 des Befestigungselements 6 geführt. Ferner ist ein Lagerungsring 31 zwischen dem hohlzylindrischen Aufnahmebereich 29 und dem ringartigen Führungsvorsprung 30 des Befestigungselements 6 vorgesehen.

Die beiden dornartigen Elemente 11 ragen in ein Aufnahmeelement 16 des zweiten Tischelements 3 abschnittsweise hinein und insbesondere durch den hohlzylindrischen Aufnahmebereich 29 hindurch.

An einem dornartigen Element 11 ist ein Aufsatzbauteil 15 befestigt. Denkbar wäre auch eine Ausführungsform, bei welcher an beiden dornartigen Elementen 11 jeweils ein Aufsatzbauteil 15 befestigt ist. Das Aufsatzbauteil 15 ist mit einem Befestigungsmittel 36, vorzugsweise einer Schraube an dem dornartigen Element 11 befestigt. Die Schraube wird in ein Innengewinde an dem dornartigen Element 11 eingebraucht.

Zwischen dem Aufsatzbauteil 15 und dem Aufnahmeelement 16 des zweiten Tischelements 3 ist weiterhin ein zweites Reibelement 17 angeordnet. Dabei ist das zweite Reibelement 17 in dem Aufnahmeelement 16 des zweiten Tischelements 3 befestigt. Es liegt eine Überpressung des zweiten Reibelements 17 zu dem Aufsatzbauteil 15 vor. Die erste Widerstandskraft ist somit durch die Reibung zwischen dem Aufsatzbauteil 15 und dem zweiten Reibelement 17 verursacht. Das Aufsatzbauteil 15 weist eine Mehrzahl an Reibflächen 15a auf.

Das zweite Reibelement 17 kann analog zu dem ersten Reibelement 14 ausgestaltet sein. Es umfasst somit ebenso einen ringförmigen Zentralabschnitt 22, ein erstes Flügelelement 23 und ein zweites Flügelelement 24. Die beiden Flügelelemente 23, 24 sind integral mit dem ringförmige Zentralabschnitt 22 ausgebildet und umfassen jeweils Reibflächen 23a, 24a, welche einander gegenüberliegend ausgebildet sind. Die Reibflächen 23a, 24a sind in Reibkontakt mit den Reibflächen 15a des Aufsatzbauteils 15.

Die beiden Flügelelemente 23, 24 des zweiten Reibelements 17 sind an einem zweiten Aufnahmebereich 35 des Aufnahmeelements 16 angeordnet. Diese Anordnung beziehungsweise Befestigung ist derart, dass bei einer Verschwenkung des zweiten Tischelements 3 sich die beiden Flügelelemente 23, 24 des zweiten Reibelements 17 mit dem zweiten Tischelement 3 mitbewegen. Die Rebflächen 23a und 24a des zweiten Reibelements 17 reiben somit an den Reibflächen 15a des Aufsatzbauteils 15. Die beiden Flügelelemente 23, 24 sind vorzugsweise formschlüssig in dem zweiten Aufnahmebereich 35 des Aufnahmeelements 16 angeordnet. Der zweite Aufnahmebereich 35 ist derart ausgestaltet, dass im eingebauten Zustand eine Überpressung der beiden Flügelelemente 23, 24 des zweiten Reibelements 17 zu den jeweiligen Reibflächen 15a des Aufsatzbauteils 15 vorliegt. Die erste Widerstandskraft ist somit durch die Reibung zwischen dem Aufsatzbauteil 15 und dem zweiten Reibelement 17 verursacht

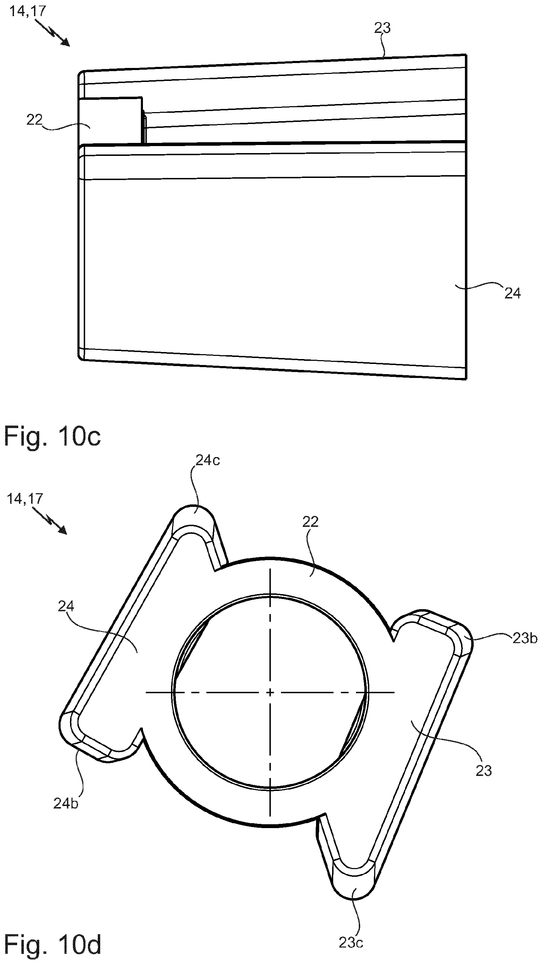

In den Figuren 10a bis 10d ist ein Reibelement dargestellt, welche als erstes Reibelement 14 oder als zweites Reibelement 17 verwendet werden kann. Selbstverständlich können die Abmessungen für die beiden Arten von Reibelementen 14, 17 unterschiedlich ausgestaltet sein. Figur 10a ist eine perspektivische Ansicht. Die Figuren 10b und 10d sind Draufsichten und die Figur 10c stellt eine Seitenansicht dar. Es werden ein ringförmiger Zentralabschnitt 22, ein erstes Flügelelement 23 und ein zweites Flügelelement 24 dargestellt. Die beiden Flügelelemente 23, 24 sind integral mit dem ringförmige Zentralabschnitt 22 ausgebildet und umfassen jeweils Reibflächen 23a, 24a, welche einander gegenüberliegend ausgebildet sind. Die Flügelelemente 23, 24 umfassen jeweils zwei Seitenflächen 23b, 23c, 24b, 24c. Eine erste Seitenfläche 23b, 24b verläuft im Wesentlichen senkrecht zu einer zugeordneten Reibfläche 23a, 24a. Die zweiten Seitenflächen 23c, 24c sind im Wesentlichen keilförmig ausgebildet. Im Wesentlichen soll hier bedeuten, dass die in den Figuren dargestellten Abrundungen nicht berücksichtigt sind. In den Figuren 10b und 10d ist ersichtlich, dass die erste Seitenfläche 23b des ersten Flügelelements 23 diagonal gegenüberliegend zu der ersten Seitenfläche 24b des zweiten Flügelelements 24 ist. Ebenso ist die zweite Seitenfläche 23c des ersten Flügelelements 23 diagonal gegenüberliegend zu der zweiten Seitenfläche 24c des zweiten Flügelelements 24. Durch eine derartige Ausgestaltung kann eine stabile Aufnahme in den jeweiligen aufnehmenden Elementen, d.h. das Befestigungselement 6 oder das Aufnahmeelement 16 gewährleistet werden.

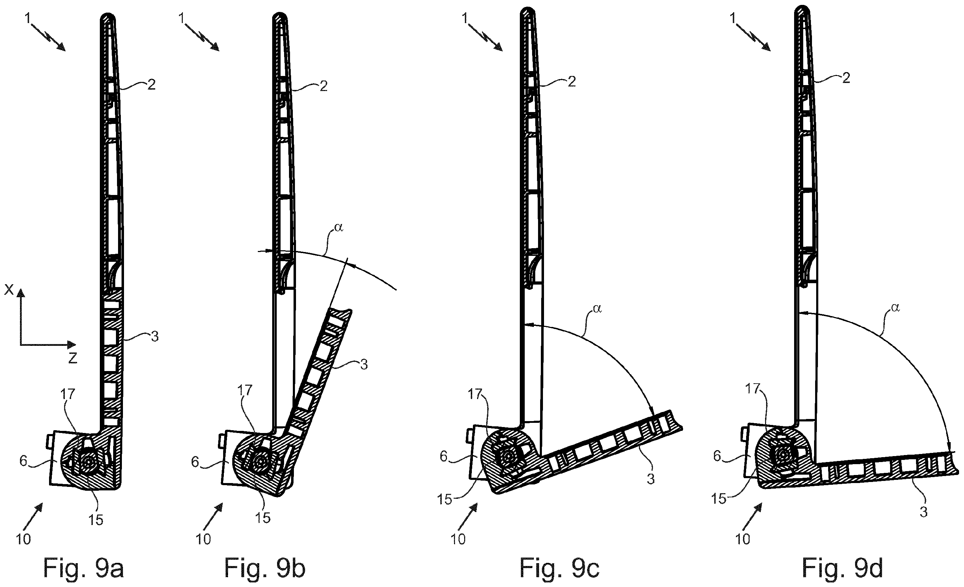

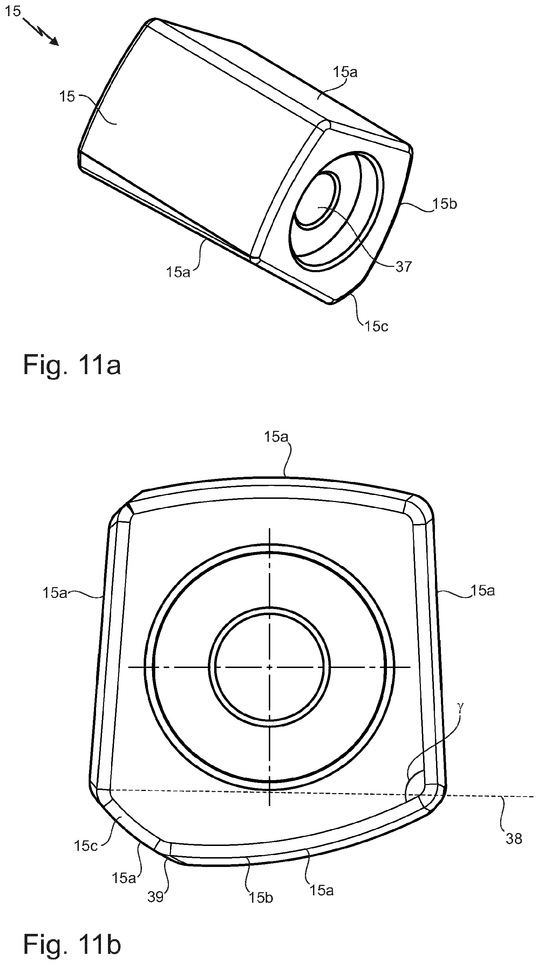

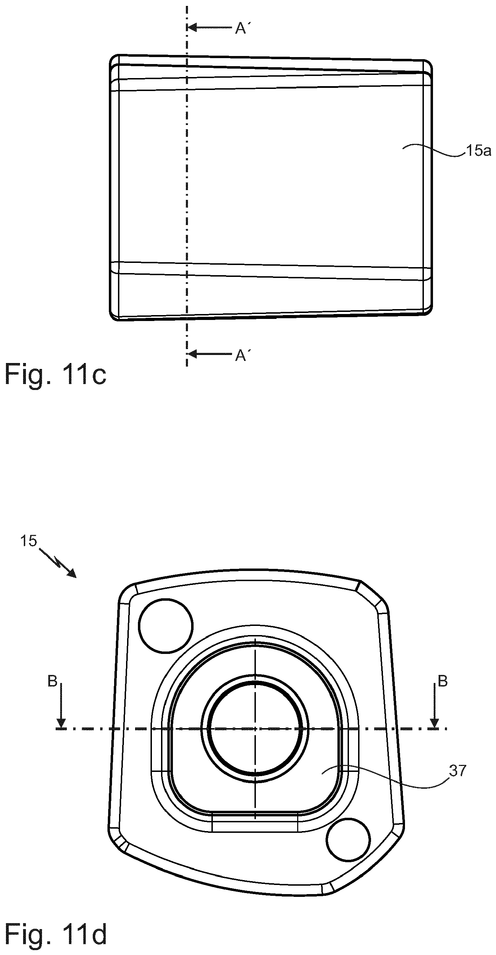

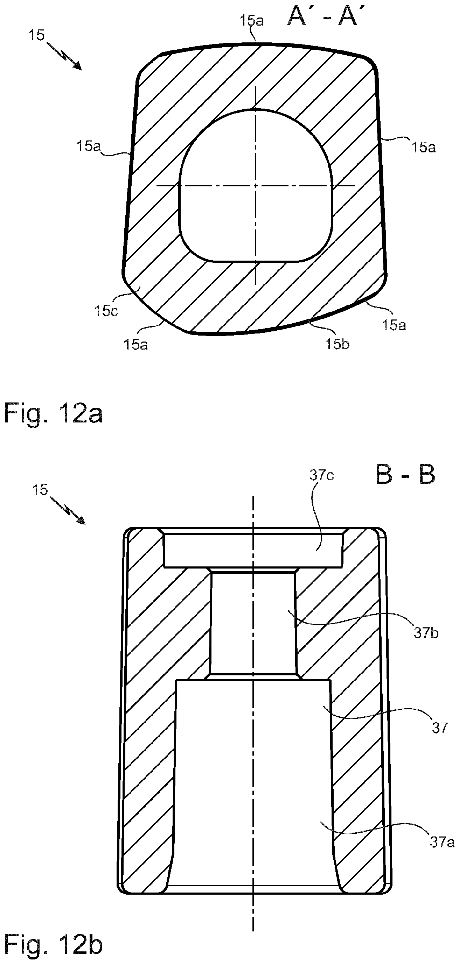

In den Figuren 11a bis 11d sowie in den Figuren 12a und 12b ist das Aufsatzbauteil 15 detailliert dargestellt. Figur 11a ist eine perspektivische Ansicht. Die Figuren 11b und 11d sind Draufsichten. Die Figur 11c ist eine Seitenansicht. In Figur 12a ist eine Schnittansicht A`-A` gemäß der Schnittachse in Figur 11c dargestellt. In Figur 12b ist eine Schnittansicht B-B gemäß der Schnittachse in Figur 11d dargestellt. Die Mantelfläche des Aufsatzbauteils 15 setzt sich zusammen aus mehreren Reibflächen 15a, welche in Abhängigkeit vom Winkel α mit den Reibflächen 23a, 24a des zweiten Reibelements 17 in Kontakt sind. Eine entsprechende Abfolge ist in der Figur 9 gut ersichtlich. Das Aufsatzbauteil 15 ist ein modifiziertes Vierkantelement. Eine untere Seitenwandung15b ist abweichend von einer Vierkantanordnung ausgeführt. Ein Innenwinkel γ zwischen der unteren Seitenwandung 15b und einer angrenzenden Seitenfläche ist großer als 90°, bevorzugt in einem Bereich zwischen 92° und 110°. Der Innenwinkel γ ist bei der Übergangskante 38 angeordnet. Bedingt durch diese Ausführung umfasst Aufsatzbauteil 15 eine zusätzliche kurze Seitenwandung 15c, welche zwischen der unteren Seitenwandung 15b und einer weiteren Seitenwandung angeordnet ist. Die zweite Übergangskante 39 ist am Übergang zwischen der untere Seitenwandung 15b und der zusätzliche Seitenwandung 15c. Auch die untere Seitenwandung 15b und die zusätzliche Seitenwandung 15c umfassen Reibflächen 15a.

Vorteilhafterweise ist der hintere Bereich 21 des dornartigen Elements 11 entsprechend dem Aufsatzbauteil 15 ausgebildet. D.h. die Anordnung der Reibflächen 21a entspricht der Anordnung der Reibflächen 15a.

Das Aufsatzbauteil 15 weist einen Durchgangskanal 37 auf, welcher verschiedene Abschnitte 37a, 37b, 37c aufweist, In Figur 12b sind die Abschnitte ersichtlich. Ein erster Abschnitt 37a dient zur Aufnahme des vorderen Bereichs 19 des dornartigen Elements 11. Dieser Abschnitt weist einen Querschnitt auf der dem Querschnitt des vorderen Bereichs 19 des dornartigen Elements 11 entspricht. In Figur 11d und Figur 12a ist dieser Querschnitt dargestellt. Der Querschnitt ist ein modifizierter quadratischer Querschnitt. Der quadratische Querschnitt ist dahingehend modifiziert, dass die obere Hälfte als Kreisbogen ausgebildet ist. Die weiteren Abschnitte 37b und 37c des Durchgangskanals 37 dienen zur Aufnahme des Befestigungsmittels 36. Dabei dient der dritte Abschnitt 37c zur Aufnahme des Schraubenkopfes und der zweite Abschnitt 37b zur Aufnahme der Schraube.

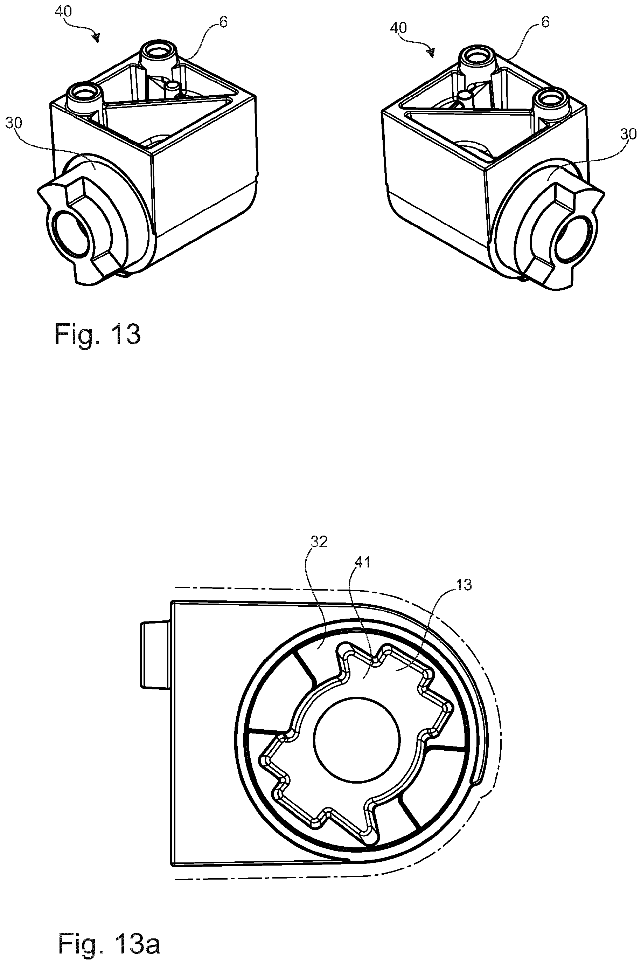

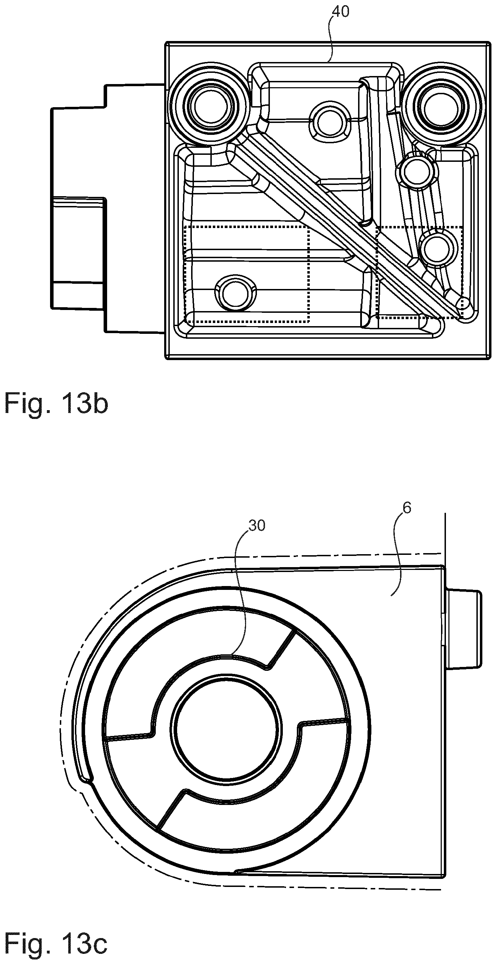

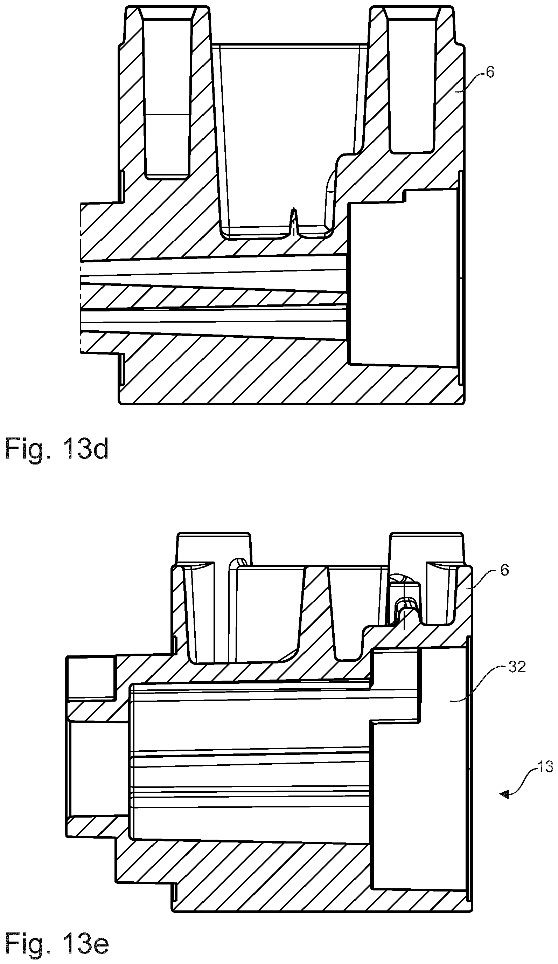

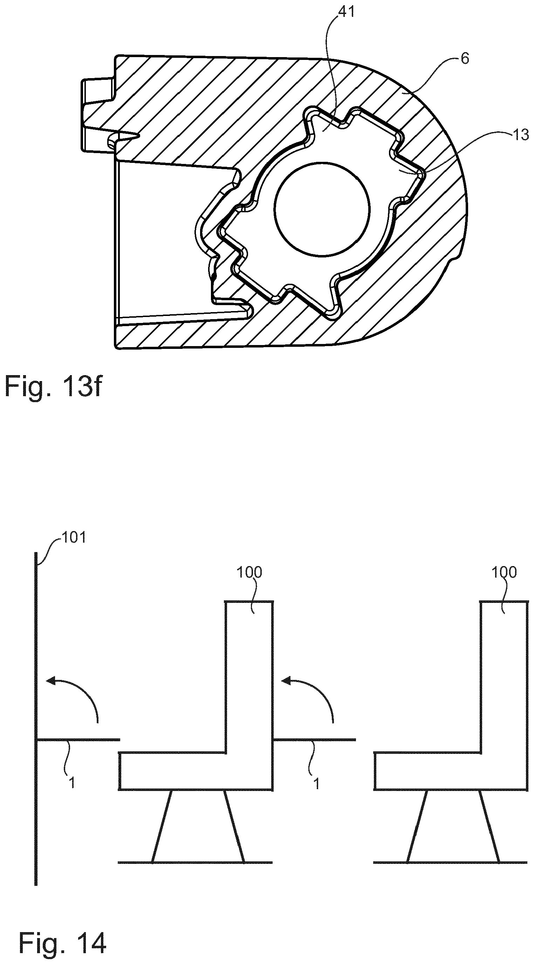

In den Figuren 13, 13a bis 13f sind die Befestigungselemente 6 detailliert dargestellt. Figur 13 ist eine perspektivische Darstellung der Befestigungselemente 6. In den Figuren 13a und 13c ist jeweils eine Seitenansicht dargestellt. In Figur 13b ist eine Ansicht von oben dargestellt, welche eine Anlagefläche 40 des Befestigungselements 6 zeigt. Diese Anlagefläche 40 liegt an einer vorderen Sitzanordnung oder einem Abschnitt des Personentransportmittels an. Vorliegend sind auch Öffnungen zum Befestigen des Befestigungselements 6 dargestellt. Somit kann das Befestigungselement mittels Schrauben befestigt werden. Die Befestigungselemente 6 umfassen einen Durchgangskanal 13. Dieser Durchgangskanal 13 umfasst einen hohlzylindrischen Aufnahmebereich 32, in welchem der kreisförmige Führungsbereich 25 des dornartigen Elements 11 aufgenommen ist. Ferner ist in dem Durchgangskanal ein zweiter Aufnahmebereich 41 für das erste Reibelement 14 dargestellt. Dieser zweite Aufnahmebereich 41 hat die Kontur der beiden Flügelelemente 23, 24. In den Figuren 13d, 13e und 13f sind die Schnitte A-A, B-B und C-C aus der Figur 13b dargestellt. In den Figuren 13e und 13f ist der Durchgangskanal 13 mit dem hohlzylindrischen Aufnahmebereich 32 und dem zweiten Aufnahmebereich 41 detailliert dargestellt. Das Befestigungselement 6 umfasst einen bereits beschriebenen ringartigen Führungsvorsprung 30. Dieser kann optional auch Anschlagelemente umfassen. Die Erfindung ist jedoch nicht auf das Vorhandensein solcher Anschlagelemente beschränkt.

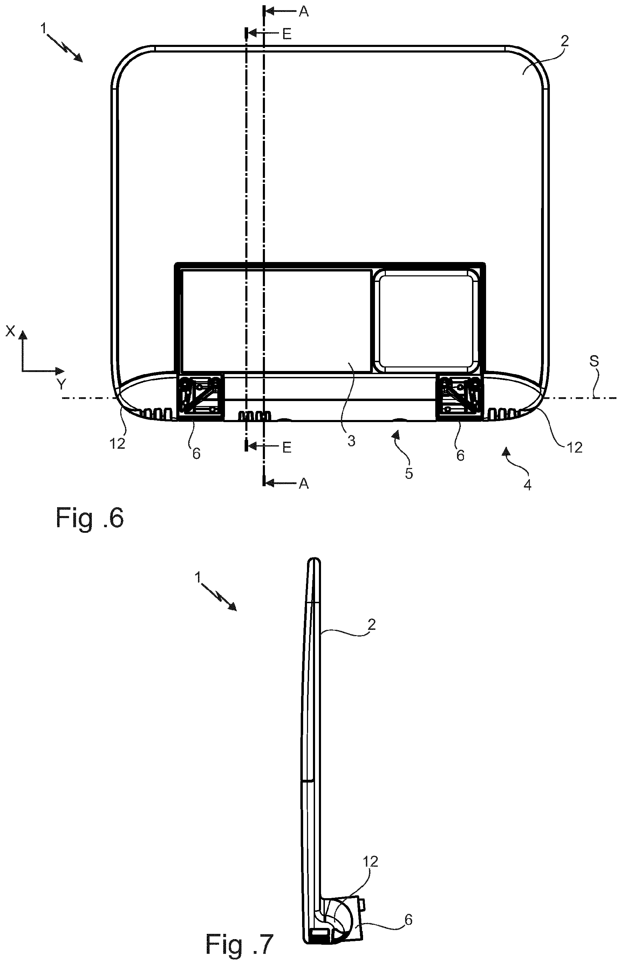

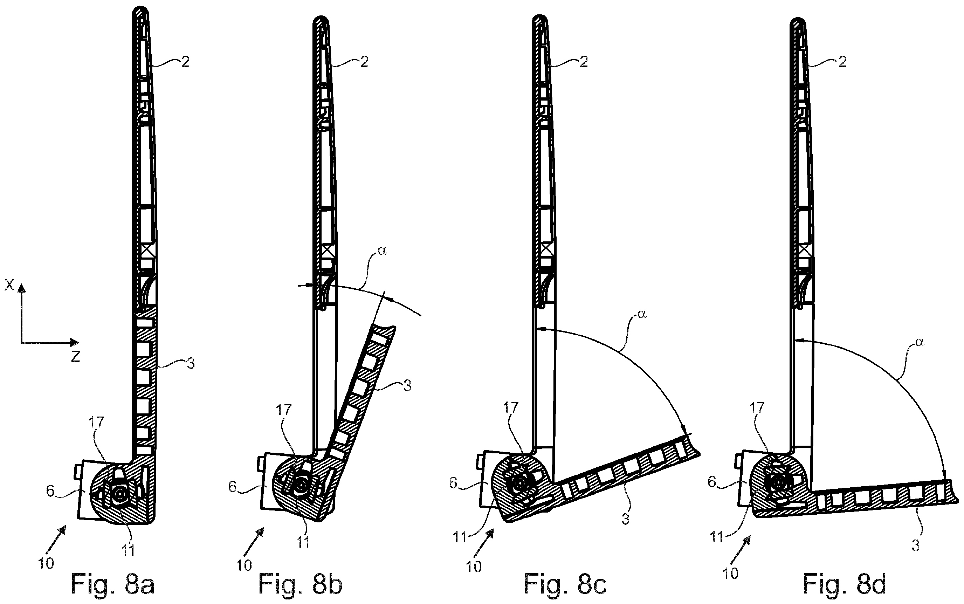

In den Figuren 8 und 9 ist eine Sequenz der Verschwenkung des zweiten Tischelements 3 um einen Winkel α dargestellt. In Figur 8 sind Schnittdarstellungen entlang der Schnittachse A-A in Figur 6 dargestellt. In Figur 9 sind Schnittdarstellungen entlang der Schnittachse E-E in Figur 6 dargestellt. In den Figuren 8a, 9a ist der Winkel α =0°. In den Figuren 8b, 9b ist der Winkel α=20°. In den Figuren 8c, 9c ist der Winkel α=70°. In den Figuren 8d, 9d ist der Winkel α=85°. Dabei ist gut ersichtlich, wie das zweite Reibelement 17 mit dem zweiten Tischelement 3 mitgedreht wird und eine entsprechende Bewegung relativ zu dem Aufsatzbauteil 15 erfolgt. Durch diese Relativbewegung wird die Reibung an den entsprechenden Reibeflächen 15a, 23a, 24a erzeugt. Bei einem Winkel von ca. 70° hat sich eine Reibfläche 23a, 24a vollständig über die erste der Übergangskante 38 bewegt. Bei einer weiteren Verschwenkung erfolgt eine Bewegung über die zweite Übergangskante 39. Befindet sich das zweite Tischelement 3 in der zweiten Position wird dieses durch die erste Widerstandskraft beziehungsweise die Reibung zwischen den Reibflächen 15a und 23a, 24a gehalten. Wird nun das erste Tischelement 2 ebenso in die zweite Position verschwenkt, dreht sich das Aufsatzbauteil 15 relativ zu dem zweiten Reibelement 17. Befindet sich das erste Tischelement 2 schließlich ebenso wie das zweite Tischelement 3 in der zweiten Position so haben das Aufsatzbauteil 15 und das zweite Reibelement 17 die gleiche Ausgangslage wie in dem Zustand bei Winkel α=0° (beide Tischelemente in der ersten Position). Die erste Widerstandskraft bewirkt dann, dass das erste Tischelement 2 und das zweite Tischelement 3 gemeinsam zur ersten Position verschwenkt werden können. Durch die Ausgestaltung des Aufsatzbauteils 15 als ein modifiziertes Vierkantelement wird die Verschwenkung des ersten Tischelements 2 zu dem zweiten Tischelement 3 in die zweite Position begünstigt.

In Figur 3a ist ein Zustand dargestellt, in welchem sich sowohl das erste Tischelement 2 als auch das zweite Tischelement 3 in der ersten Position befinden. Beide Tischelemente werden dort eingeständig durch die Reibelemente in Position gehalten. Das zweite Tischelement 3 kann unabhängig vom ersten Tischelement 2 gebremst nach unten in die zweite Position gebracht werden und auch wieder nach oben zur ersten Position geklappt werden. Dies ist in Figur 3b gezeigt werden. Das zweite Tischelement 3 wird beim Hochklappen wieder in der oberen Endstellung, der ersten Position über das zweite Reibelement 17 eingeständig gehalten. Das erste Tischelement 2 kann zusammen mit dem zweiten Tischelement 3 nach unten zur zweiten Position und nach oben zur ersten Position verschwenkt werden. Dabei sind beide Tischelemente 2, 3 durch das zweite Reibelement 17 miteinander arretiert. Die gemeinsame Verschwenkung wird mittels der ersten Reibelemente 14 gebremst und das Klappen findet gemeinsam statt. Das erste Tischelement 2 kann dem zweiten Tischelement in die zweite Position folgen, siehe Figur 3c. Dabei arretiert sich das erste Tischelement 2 in der unteren zweiten Position mittels des zweiten Reibelements 17 mit dem zweiten Tischelement Das Hochklappen erfolgt dann dank der Arretierung durch das zweite Reibelement 17 gemeinsam.

Mittels der Befestigungselemente 6 kann die Tischeinrichtung 1 an einer Rückseite einer Sitzanordnung 100 oder an einem Abschnitt 101 des Personentransportmittels befestigt werden. Die Tischeinrichtung 1 ist demnach von einem Insassen in einer dahinter angeordneten Sitzanordnung nutzbar. In Figur 14 ist beispielhaft eine Sitzanordnung 100 in einem Personentransportmittel umfassend eine Tischeinrichtung 1 dargestellt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Tischeinrichtung
- 2: erstes Tischelement
- 2a: Rückseite des ersten Tischelements
- 3: zweites Tischelement
- 4: unterer Bereich des ersten Tischelements
- 5: unterer Bereich des zweiten Tischelements
- 6: Befestigungselement
- 7: Ausnehmung
- 8: erste Oberfläche
- 9: zweite Oberfläche
- 10: Halte- und Verstellmechanismus
- 11: dornartiges Element
- 12: Lagerungsabschnitt
- 13: Durchgangskanal
- 14: erstes Reibelement
- 15: Aufsatzbauteil
- 15a: Reibflächen des Aufsatzbauteils
- 15b: untere Seitenwandung
- 15c: zusätzliche Seitenwandung
- 16: Aufnahmeelement
- 16a: erstes Teil
- 16b: zweites Teil
- 17: zweites Reibelement
- 18: Einbuchtung
- 19: vorderer Bereich des dornartigen Elements
- 20: mittlerer Bereich des dornartigen Elements
- 21: hinterer Bereich des dornartigen Elements
- 21a: Reibfläche hinteren Bereichs
- 22: ringförmigen Zentralabschnitt
- 23: erstes Flügelelement
- 23a: Reibfläche
- 23b: erste Seitenfläche
- 23c: zweite Seitenfläche
- 24: zweites Flügelelement
- 24a: Reibfläche
- 24b: erste Seitenfläche
- 24c: zweite Seitenfläche
- 25: kreisförmiger Führungsbereich
- 26: Lagerungshülse
- 27: Lagerungsring
- 28: Anschlagelement
- 29: Aufnahmebereich des Aufnahmeelements
- 30: ringartiger Führungsvorsprung
- 31: Lagerungsring
- 32: hohlzylindrischen Aufnahmebereich des Durchgangskanals
- 33: zweiter Aufnahmebereich des Durchgangskanals
- 34: Endbereich des Durchgangskanals
- 35: zweiter Aufnahmebereich des Aufnahmeelements
- 36: Befestigungsmittel
- 37: Durchgangskanal
- 37a: erster Abschnitt des Durchgangskanals
- 37b: zweiter Abschnitt des Durchgangskanals
- 37c: dritter Abschnitt des Durchgangskanals
- 38: Übergangskante
- 39: zweite Übergangskante
- 40: Anlagefläche
- 41: Aufnahmebereich für Reibelement
- 100: Sitzanordnung
- 101: Abschnitt des Personentransportmittels
- α: Winkel
- β: Winkel
- γ: Winkel
- S: Schwenkachse
- X: Längsachse
- Y: Breitenachse
- Z: Höhenachse

## Patentansprüche

1. Tischeinrichtung (1) insbesondere für eine Sitzanordnung (100) in einem Personentransportmittel umfassend ein erstes Tischelement (2),
**dadurch gekennzeichnet, dass**
das erste Tischelement (2) ein zweites Tischelement (3) zumindest teilweise umschließt, wobei das zweite Tischelement (3) sowohl zusammen mit dem ersten Tischelement (2) als auch unabhängig von dem ersten Tischelement (2) zwischen einer ersten Position und einer zweiten Position verlagerbar ist.

2. Tischeinrichtung (1) nach Anspruch 1,
**dadurch gekennzeichnet, dass**
das erste Tischelement (2) und das zweite Tischelement (3) um eine Schwenkachse (S) verschwenkbar sind, welche in einem entlang der Längsachse (X) unteren Bereich (4) des ersten Tischelements (2) und einem entlang der Längsachse (X) unteren Bereich (5) des zweiten Tischelements (3) verläuft, wobei das zweite Tischelement (3) sowohl gemeinsam mit dem ersten Tischelement (2) als auch unabhängig von dem ersten Tischelement (2) um die Schwenkachse (S) verschwenkbar ist, wobei die Tischeinrichtung (1) zumindest zwei Befestigungselemente (6) umfasst, mittels welchen die Tischeinrichtung (1) an einer Sitzanordnung (100) und/oder an einem Personentransportmittel anordenbar ist, wobei zwischen dem ersten Tischelement (2) und dem zweiten Tischelement (3) ein Winkel α aufgespannt ist, wobei der Winkel α in einem Bereich zwischen 0° und 95° liegt, wobei zwischen der ersten Position und der zweiten Position ein Winkel β aufgespannt ist, wobei der Winkel β in einem Bereich zwischen 80°und 95°liegt.

3. Tischeinrichtung (1) nach Anspruch 1 oder 2,
**dadurch gekennzeichnet, dass**
das erste Tischelement (2) eine Ausnehmung (7) aufweist, in welcher das zweite Tischelement (3) anordenbar ist, wobei das erste Tischelement (2) und/oder das zweite Tischelement (3) in der zweiten Position eine Auflagefläche bereitstellen, wobei das erste Tischelement (2) plattenartig ausgebildet ist und eine erste Oberfläche (8) aufweist, welche in der zweiten Position die Auflagefläche zumindest teilweise ausbildet, wobei das zweite Tischelement (3) plattenartig ausgebildet ist und eine zweite Oberfläche (9) aufweist, welche in der zweiten Position die Auflagefläche zumindest teilweise ausbildet.

4. Tischeinrichtung (1) nach einem der vorhergehenden Ansprüche,
**dadurch gekennzeichnet, dass**
ein Halte- und Verstellmechanismus (10) vorgesehen ist, der zumindest eine erste Widerstandskraft bereitstellt, wobei zumindest eine erste Widerstandskraft zwischen dem ersten Tischelement (2) und dem zweiten Tischelement (3) wirkt, so dass eine gemeinsame Bewegung von der ersten Position zu der zweiten Position als auch von der zweiten Position zu der ersten Position ermöglicht ist, wobei durch die zumindest eine erste Widerstandskraft eine gebremste Bewegung des zweiten Tischelements (3) von der ersten Position zu der zweiten Position ermöglicht ist.

5. Tischeinrichtung (1) nach Anspruch 4,
**dadurch gekennzeichnet, dass**
der Halte- und Verstellmechanismus (10) zumindest eine zweite Widerstandskraft bereitstellt, wobei die zumindest eine zweite Widerstandskraft zwischen dem ersten Tischelement (2) und zumindest einem der zumindest zwei Befestigungselemente (6) wirkt, wobei mittels der zumindest einen zweiten Widerstandskraft das erste Tischelement (2) in der ersten Position gehalten ist, wobei durch die zumindest eine zweite Widerstandskraft eine gebremste Bewegung des ersten Tischelements (2) von der ersten Position zu der zweiten Position ermöglicht ist.

6. Tischeinrichtung (1) nach einem der Ansprüche 4 bis 5,
**dadurch gekennzeichnet, dass**
der Halte- und Verstellmechanismus (10) zwei dornartige Elemente (11) umfasst, wobei die dornartigen Elemente (11) jeweils an einem Lagerungsabschnitt (12) des ersten Tischelements (2) angeordnet sind, wobei zwei dornartige Elemente (11) entlang einer Bereitenachse (Y) gegenüberliegend angeordnet sind wobei ,je ein dornartiges Element (11) in einem Durchgangskanal (13) eines entsprechenden Befestigungselements (6) hindurchragt.

7. Tischeinrichtung (1) nach Anspruch 6,
**dadurch gekennzeichnet, dass**
zwischen einem dornartigen Element (11) und dem jeweiligen Befestigungselement (6) ein erstes Reibelement (14) angeordnet ist, wobei das erste Reibelement (14) an oder in dem Befestigungselement (6) befestigt ist, wobei eine Überpressung des ersten Reibelements (14) zu dem dornartigen Element (11) vorliegt, wobei die zweite Widerstandskraft durch die Reibung zwischen dem dornartigen Element (11) und dem ersten Reibelement (14) verursacht ist.

8. Tischeinrichtung (1) nach einem der Ansprüche 6 bis 7,
**dadurch gekennzeichnet, dass**
das zweite Tischelement (3) an dem ersten Tischelement (2) und den Befestigungselementen (6) verschwenkbar angeordnet ist, wobei die beiden dornartigen Elemente (11) in ein Aufnahmeelement (16) des zweiten Tischelements (3) abschnittsweise hineinragen.

9. Tischeinrichtung (1) nach Anspruch 8,
**dadurch gekennzeichnet, dass**
an zumindest einem dornartigen Element (11) ein Aufsatzbauteil (15) befestigt ist, wobei zwischen dem Aufsatzbauteil (15) und einem Aufnahmeelement (16) des zweiten Tischelements (3) ein zweites Reibelement (17) angeordnet ist, wobei das zweite Reibelement (17) an oder in dem Aufnahmeelement (16) des zweiten Tischelements (3) befestigt ist, wobei eine Überpressung des zweiten Reibelements (17) zu dem Aufsatzbauteil (15) vorliegt, wobei die erste Widerstandskraft durch die Reibung zwischen dem Aufsatzbauteil (15) und dem zweiten Reibelement (17) verursacht ist.

10. Sitzanordnung (100) in einem Personentransportmittel umfassend eine Tischeinrichtung (1) nach einem der einem der vorhergehenden Ansprüche.
